# NEUE EUROPÄISCHE PATENTSCHRIFT

(11) **EP 1 349 754 B2**
(45) Veröffentlichungstag und Bekanntmachung des Hinweises auf die Entscheidung über den Einspruch: **18.01.2012**
(45) Hinweis auf die Patenterteilung: 06.09.2006
(21) Anmeldenummer: 01984786.2
(22) Anmeldetag: 29.11.2001
(51) Int. Cl.: B60S 3/04

(54) **VORRICHTUNG ZUR REINIGUNG EINES FAHRZEUGES**
DEVICE FOR CLEANING A VEHICLE
DISPOSITIF DE LAVAGE D'UN VEHICULE

(30) Priorität: 08.01.2001 DE 10101018
(43) Veröffentlichungstag der Anmeldung: 08.10.2003
(73) Patentinhaber: Alfred Kärcher GmbH & Co. KG, 71364 Winnenden (DE)
(72) Erfinder: BERGER, Oliver, 71672 Marbach (DE); TEWS, Peter, 72760 Reutlingen (DE)
(74) Vertreter: Karrais, Martin
(86) Internationale Anmeldenummer: PCT/EP2001/013964
(87) Internationale Veröffentlichungsnummer: WO 2002/053423

(56) Entgegenhaltungen:
- EP-A- 0 379 353
- EP-A2- 0 379 353
- WO-A-01/49538
- AU-A- 5 874 086
- AU-A- 5 874 086
- DE-A- 2 231 846
- DE-A- 19 751 016
- DE-A1- 2 231 846
- DE-A1- 19 751 016
- US-A- 5 076 304
- US-A- 5 076 304
- US-A- 5 447 574
- US-A- 5 447 574
- KAFIFORNIA KLEINDIENST - AUSBURG: 'Portalanlage CK 45 Combi -Grosse Leistung -viele Möglichkeiten' PROSPEKT EINER VORBENUTZTEN WASCHANLAGE 01 August 1998,
- CALIFORNIA KLEINDIENST AUTOWASCHTECHNIK GMBH: 'Lichtschranke Kurze Halle der Teilrechtsvorgängerin der Einsprechenden' WERKSTATT-ANBAU ZEICHNUNG 13 Dezember 2000,
- 'Prinzipskizze der Funktionsweise der vorbenutzten Fahrzeugwaschanlage'

## Beschreibung

Die Erfindung betrifft eine Fahrzeugwaschantage mit den Merkmalen des Oberbegriffes von Patentanspruch 1.

Die Reinigung eines Fahrzeuges in einer Fahrzeugwaschanlage erfolgt. üblicherweise mittels Reinigungsbürsten, die entlang des Fahrzeuges verfahrbar sind und während der Reinigung die Fahrzeugoberfläche zur Entfernung von Schmutz berühren. Es sind auch Fahrzeugwaschanlagen bekannt, bei denen die Reinigung berührungslos erfolgt, indem eine Reinigungsflüssigkeit unter Hochdruck auf das Fahrzeug gespritzt oder gesprüht wird. Hierzu kommen üblicherweise eine Vielzahl von Düsenanordnungen zum Einsatz, die vertikal und horizontal ausgerichtet sind und das zu reinigende Fahrzeug in der Art eines Portals umgeben.

Mittels der eingangs genannten ersten Reinigungswerkzeuge, beispielsweise in Form von um eine vertikale Drehachse rotierbaren Waschbürsten, können üblicherweise die Fahrzeuglängsseiten gereinigt werden, und zur Reinigung der Motorhaube, des Fahrzeugdaches sowie gegebenenfalls des Kofferraumdeckels kommen üblicherweise die eingangs genannten zweiten Reinigungswerkzeuge, beispielsweise in Form einer um eine horizontale Drehachse rotierbaren Waschbürste, zum Einsatz. Die besonders schmutzanfälligen Front- und Heckpartien des Fahrzeuges werden häufig sowohl mit den ersten als auch mit den zweiten Reinigungswerkzeugen gereinigt. Hierzu sind die ersten Reinigungswerkzeuge sowohl in Längsrichtung als auch in Querrichtung entlang des Fahrzeuges verfahrbar, und die zweiten Reinigungswerkzeuge können in vertikaler Richtung soweit abgesenkt werden, daß mit ihrer Hilfe auch die Front- und Heckpartien erfaßt werden können. Sollen allerdings überlange Fahrzeuge gereinigt werden, so kann es vorkommen, daß der Platz innerhalb der Fahrzeugwaschanlage nicht ausreicht, um die beiden Reinigungswerkzeuge um das gesamte Fahrzeug herum zu verfahren.

Von der Firma Wash-Tec Cleaning Technology GmbH sind Fahrzeugwaschanlagen mit der Bezeichnung "CK 45 Combi" bekannt, die die Merkmale des Oberbegriffes von Patentanspruch 1 aufweisen.

Aufgabe der vorliegenden Erfindung ist es, eine Fahrzeugwaschanlage bereitzustellen, mit deren Hilfe auch überlange Fahrzeuge gereinigt werden können, ohne dass durch die Prüfung der Fahrzeuglänge die Reinigungszeit erhöht wird.

Diese Aufgabe wird durch eine Fahrzeugwaschanlage mit den Merkmalen von Patentanspruch 1 gelöst.

In die Erfindung fließt der Gedanke mit ein, daß auch überlange Fahrzeuge in einer Fahrzeugwaschanlage mit beengten Platzverhältnissen dadurch gereinigt werden können, daß man das Fahrzeugheck und/oder die Fahrzeugfront nur mit einem der Reinigungswerkzeuge, also nur mit dem mindestens einen ersten Reinigungswerkzeug oder nur mit dem mindestens einen zweiten Reinigungswerkzeug reinigt, sofern die Fahrzeuglänge einen Maximalwert überschreitet, der durch die Länge der jeweiligen Fahrzeugwaschanlage vorgebbar ist. Hierzu wird mittels einer Prüfeinrichtung geprüft, ob die Länge des zu reinigenden Fahrzeuges den vorgegebenen Maximalwert überschreitet. Ist dies nicht der Fall, so kommen in üblicher Weise zur Reinigung der Fahrzeugfront und/oder des Fahrzeughecks sowohl die ersten als auch die zweiten Reinigungswerkzeuge zum Einsatz. Liegt jedoch ein überlanges Fahrzeug vor, so daß dessen Fahrzeuglänge den Maximalwert überschreitet, so wird zur Reinigung der Fahrzeugfront und/oder des Fahrzeughecks lediglich eines der ersten und zweiten Reinigungswerkzeuge ausgewählt. Die Auswahl erfolgt hierbei selbsttätig mittels der Prüfeinrichtung, so daß eine manuelle Einstellung des Benutzers oder Betreibers der Fahrzeugwaschanlage nicht erforderlich ist.

Wie bereits erläutert, kann mittels der Prüfeinrichtung sichergestellt werden, daß bei überlangen Fahrzeugen die Reinigung des Heck- und oder Frontbereiches nur mit den ersten oder nur mit den zweiten Reinigungswerkzeugen erfolgt, während zur Reinigung der übrigen Bereiche des Fahrzeuges in üblicher Weise sowohl die ersten als auch die zweiten Reinigungswerkzeuge herangezogen werden.

Die ersten und zweiten Reinigungswerkzeuge sind bezogen auf die Einfahrtrichtung des zu reinigenden Fahrzeuges versetzt zueinander an einer längs einer Führungsbahn verfahrbaren Transporteinrichtung gehalten und bilden vordere und hintere Reinigungswerkzeuge aus, wobei zwischen den vorderen und hinteren Reinigungswerkzeugen ein Endsensor angeordnet ist zum Erfassen des Front- und/oder Heckendes des Fahrzeuges. Mittels der Transporteinrichtung können die Reinigungswerkzeuge entlang des Fahrzeuges verfahren werden, und mit Hilfe des zwischen den vorderen und hinteren Reinigungswerkzeugen angeordneten Endsensors kann das vordere oder hintere Ende des Fahrzeuges erfaßt werden.

Die erfindungsgemäße Fahrzeugwaschanlage umfaßt einen vorderen und/oder hinteren Endschalter, der ein Signal bereitstellt, sofern die Transporteinrichtung bezogen auf die Einfahrtrichtung des zu reinigenden Fahrzeuges das vordere und/oder hintere Ende der Führungsbahn erreicht hat. Das vom Endschalter bereitgestellte Signal kann beispielsweise zur Ansteuerung einer Antriebseinheit der Transporteinrichtung herangezogen werden.

Es kann vorgesehen sein, daß die Fahrzeugwaschanlage lediglich ein einziges erstes Reinigungswerkzeug umfaßt, das um das gesamte Fahrzeug herum verfahrbar gelagert ist, so daß mit dessen Hilfe Front- und Heckbereich sowie beide Längsseiten des Fahrzeuges zuverlässig gereinigt werden können. Dies ist allerdings mit einer nicht unbeträchtlichen Reinigungszeit verbunden.

Bei einer bevorzugten Ausführungsform ist vorgesehen, daß die Fahrzeugwaschanlage zwei erste Reinigungswerkzeuge umfaßt, die jeweils an einer Seite des zu reinigenden Fahrzeuges positionierbar sind. Mittels der beiden ersten Reinigungswerkzeuge können gleichzeitig beide Längsseiten des Fahrzeuges gereinigt werden. Da die beiden ersten Reinigungswerkzeuge auch quer zum Fahrzeug verfahrbar sind, können mit ihrer Hilfe auch die Fahrzeugfront und das Fahrzeugheck gereinigt werden.

Die ersten Reinigungswerkzeuge können beispielsweise als um eine vertikale Drehachse rotierbare Waschbürsten ausgebildet sein.

Als zweites Reinigungswerkzeug kann eine um eine horizontale Drehachse rotierbare Waschbürste zum Einsatz kommen.

Um eine Beschädigung der Fahrzeugoberfläche zu vermeiden, ist es von Vorteil, wenn die ersten Reinigungswerkzeuge mindestens eine vertikal ausgerichtete Düsenanordnung umfassen, die zur Reinigung des Fahrzeuges mit Reinigungsflüssigkeit beaufschlagbar ist. Mittels der Düsenanordnung kann eine berührungslose Reinigung der Fahrzeugoberfläche sichergestellt werden.

Um das Fahrzeug entlang seiner beiden Längsseiten und auch im Front- und Heckbereich mittels der ersten Reinigungswerkzeuge zuverlässig zu reinigen, kann bei einer Ausgestaltung der Erfindung vorgesehen sein, daß die Düsenanordnung zumindest zwei Düsengruppen umfaßt, wobei eine erste Düsengruppe während einer Querbewegung und eine zweite Düsengruppe während einer Längsbewegung der Düsenanordnung dem zu reinigenden Fahrzeug zugewandt ist. Dies ermöglicht es, beispielsweise den Frontbereich sowie eine Längsseite des Fahrzeuges mit den beiden Düsengruppen einer ersten Düsenanordnung zu reinigen. Der Heckbereich und die andere Längsseite des Fahrzeuges können zur Reinigung mit den beiden Düsengruppen einer zweiten Düsenanordnung mit Reinigungsflüssigkeit besprüht oder bespritzt werden.

Bei einer besonders bevorzugten Ausgestaltung der erfindungsgemäßen Fahrzeugwaschanlage ist vorgesehen, daß mindestens eine Düsenanordnung drei Düsengruppen umfaßt, wobei eine erste Düsengruppe während einer Querbewegung vor dem zu reinigenden Fahrzeug, eine zweite Düsengruppe während einer Längsbewegung entlang einer Fahrzeuglängsseite und eine dritte Düsengruppe während einer Querbewegung hinter dem zu reinigenden Fahrzeug dem Fahrzeug zugewandt ist. Bei einer derartigen Ausgestaltung ist es lediglich erforderlich, eine einzige Düsenanordnung sowohl in Quer- als auch in Längsrichtung bewegbar auszugestalten. Für die Reinigung der verbleibenden, zweiten Fahrzeuglängsseite kann zusätzlich eine lediglich in Längsrichtung bewegbare Düsenanordnung zum Einsatz kommen.

Um auch den Bereich der Motorhaube und des Daches des Fahrzeuges berührungslos reinigen zu können, ist es günstig, wenn ein zweites Reinigungswerkzeug als horizontal ausgerichtete Düsenanordnung ausgebildet ist, die mit Reinigungsflüssigkeit beaufschlagbar ist und erste und zweite Düsengruppen umfaßt, wobei die erste Düsengruppe bezogen auf die Einfahrtrichtung des zu reinigenden Fahrzeuges mit einer schräg nach hinten weisenden Richtungskomponente und die zweite Düsengruppe mit einer schräg nach vorne weisenden Richtungskomponente auf das Fahrzeug gerichtet ist. Mittels einer derartigen, horizontal ausgerichteten Düsenanordnung können zusätzlich zum Bereich der Motorhaube und des Daches des Fahrzeuges auch dessen Front- und Heckbereich zuverlässig gereinigt werden, denn hierzu umfaßt die Düsenanordnung schräg in Richtung Fahrzeugfront bzw. in Richtung Fahrzeugheck gerichtete Düsengruppen.

Insbesondere bei einer berührungslosen Reinigung des Fahrzeuges ist es von Vorteil, wenn den ersten und zweiten Reinigungswerkzeugen Steuersensoren zugeordnet sind zur Steuerung der Reinigungswerkzeuge während ihrer Bewegung entlang des Fahrzeuges. Dies ermöglicht es, die Reinigungswerkzeuge in einem vorgebbaren Abstand zum Fahrzeug bewegbar anzuordnen. Insbesondere bei Einsatz von Düsenanordnungen kann mittels der Steuersensoren auf konstruktiv einfache Weise sichergestellt werden, die Düsenanordnungen jeweils in einem derartigen Abstand zur Fahrzeugoberfläche anzuordnen, das ein optimales Reinigungsergebnis bei der Beaufschlagung des Fahrzeugs mit Reinigungsflüssigkeit erzielbar ist. Hierbei fließt der Gedanke mit ein, daß bei der Reinigung mittels Hochdruckstrahlen ein zu großer Abstand der Düsenanordnung vom Fahrzeug eine Verschlechterung des Reinigungsergebnisses zur Folge hat und daß bei einem zu geringen Abstand die Gefahr einer Beschädigung des Fahrzeugs aufgrund einer Kollision mit der Düsenanordnung besteht.

Vorzugsweise umfaßt der Endsensor eine schräg zur Horizontale ausgerichtete Lichtschranke. Die Lichtschranke weist hierbei einen Lichtsender und einen Lichtempfänger auf, die auf unterschiedlicher Höhe angeordnet sind, so daß mittels des schräg ausgerichteten Lichtstrahls das Front- und/oder Heckende des Fahrzeuges unabhängig vom Fahrzeugaufbau sicher erkannt werden kann.

Bei einer besonders bevorzugten Ausführungsform der Erfindung ist vorgesehen, daß die Prüfvorrichtung eine Steuereinheit umfaßt, die mit dem Endschalter, dem Endsensor sowie mit dem Steuersensor des vorderen und/oder hinteren Reinigungswerkzeugs gekoppelt ist und die vorderen und hinteren Reinigungswerkzeuge zur Reinigung der Fahrzeugfront und/oder des Fahrzeughecks steuert. Eine derartige Ausgestaltung hat den Vorteil, daß mittels der Steuereinheit und der Sensoren und Schalter, die eine einwandfreie Funktion der Fahrzeugwaschanlage sicherstellen, gleichzeitig auch die ersten und zweiten Reinigungswerkzeuge zur Reinigung des Front- und/oder Heckbereichs gesteuert werden können.

Es kann beispielsweise vorgesehen sein, daß mittels der Steuereinheit das bezogen auf die Einfahrtrichtung des zu reinigenden Fahrzeuges vordere Reinigungswerkzeug deaktivierbar ist, sofern sowohl der hintere Endschalter als auch der Steuersensor des vorderen Reinigungswerkzeuges belegt sind und der Endsensor das Überschreiten des Fahrzeughecks anzeigt. Eine derartige Ausgestaltung ermöglicht auf konstruktiv einfache Weise gleichzeitig eine Reinigung des Fahrzeuges und eine Prüfung von dessen Fahrzeuglänge. Ausgehend von der Fahrzeugfront kann die Transporteinrichtung mit den daran gehaltenen vorderen und hinteren Reinigungswerkzeugen in Richtung auf das Fahrzeugheck verfahren werden. Handelt es sich um ein überlanges Fahrzeug, so kann es vorkommen, daß beim Verfahren der Transporteinrichtung lediglich das bezogen auf die Einfahrtrichtung hintere Reinigungswerkzeug sowie der zwischen den Reinigungswerkzeugen angeordnete Endsensor das Fahrzeugheck überschreiten, daß aber der Endschalter bereits das Erreichen der hinteren Endposition für die Transporteinrichtung anzeigt, bevor auch das bezogen auf die Einfahrtrichtung vordere Reinigungswerkzeug das Fahrzeugheck erreicht hat. Die Steuereinheit wählt in einem derartigen Falle lediglich das in Einfahrtrichtung hintere Reinigungswerkzeug zur Reinigung von dessen Heckbereich aus, während das vordere Reinigungswerkzeug von der Steuereinheit deaktiviert wird. Wird statt eines überlangen Fahrzeuges ein Fahrzeug mit verhältnismäßig kurzer Länge gereinigt, so können beim Verfahren der Transporteinrichtung beide Reinigungswerkzeuge das Fahrzeugheck überschreiten, bevor der Endschalter belegt ist, und beide Reinigungswerkzeuge können zur Reinigung des Heckbereichs herangezogen werden, d. h. es erfolgt keine Deaktivierung einer der beiden Reinigungswerkzeuge.

Selbstverständlich kann auch vorgesehen sein, daß bei der Reinigung des Fahrzeuges die Transporteinrichtung in Richtung auf die Fahrzeugfront verfahren wird. Hierbei ist es von Vorteil, wenn mittels der Steuereinheit das bezogen auf die Einfahrtrichtung des zu reinigenden Fahrzeuges hintere Reinigungswerkzeug daktiviertbar ist, sofern sowohl der vordere Endschalter als auch der Steuersensor des hinteren Reinigungswerkzeuges belegt sind und der Endsensor das Überschreiten der Fahrzeugfront anzeigt.

Die nachfolgende Beschreibung zweier bevorzugter Ausführungsformen der Erfindung dient im Zusammenhang mit der Zeichnung der näheren Erläuterung. Es zeigen:
- Figur 1:: eine schematische Seitenansicht einer üblichen Fahrzeugwaschanlage;
- Figur 2:: eine schematische Draufsicht einer üblichen Fahrzeugwaschanlage;
- Figur 3:: eine schematische Draufsicht einer bekannten Fahrzeugwaschanlage beim Einfahren eines überlangen Fahrzeuges;
- Figur 4:: eine schematische Draufsicht gemäß Figur 3 mit einem überlangen Fahrzeug in seiner Endstellung;
- Figur 5:: eine schaubildliche Ansicht einer erfindungsgemäßen Fahrzeugwaschanlage;
- Figur 6:: eine Schnittansicht längs der Linie 6-6 in Figur 5;
- Figur 7:: eine Schnittansicht längs der Linie 7-7 in Figur 5;
- Figur 8:: eine schematische Darstellung eines Verfahrens zur Reinigung eines verhältnismäßig kurzen Fahrzeuges in der Fahrzeugwaschanlage gemäß Figur 5 und
- Figur 9:: eine schematische Darstellung eines Verfahrens zur Reinigung eines überlangen Fahrzeuges in der Fahrzeugwaschanlage gemäß Figur 5.

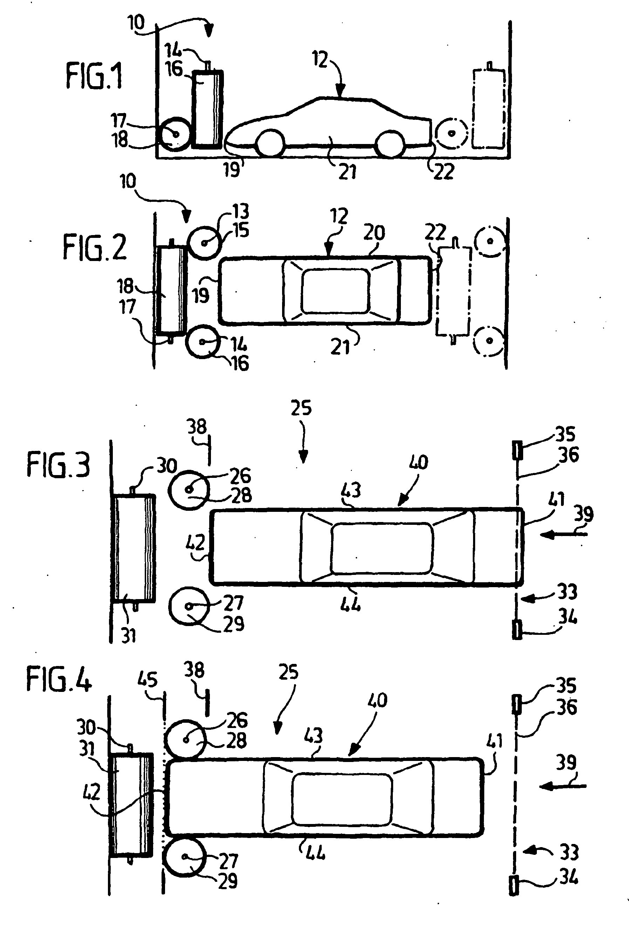

In den Figuren 1 und 2 ist in schematischer Darstellung eine bekannte Fahrzeugwaschanlage 10 dargestellt, in der ein verhältnismäßig kurzes Fahrzeug 12 positioniert ist. Die Fahrzeugwaschanlage 10 umfaßt in üblicher Weise zwei jeweils um eine vertikale Drehachse 13, 14 rotierbare Seitenbürsten 15 bzw. 16 sowie eine um eine horizontal ausgerichtete Drehachse 17 rotierbare und in vertikaler Richtung entsprechend der Kontur des Fahrzeuges 12 verstellbare Dachbürste 18. Die Seitenbürsten 15, 16 sowie die Dachbürste 18 sind gemeinsam an einem an sich bekannten und deshalb in der Zeichnung nicht dargestellten Portal gehalten, das entlang des Fahrzeuges 12 hin- und herbewegbar ist. Zu Beginn des Reinigungsvorganges sind die Seiten- und Dachbürsten 15, 16, 18 - wie in den Figuren 1 und 2 in durchgezogener Linie dargestellt - vor dem Frontbereich 19 des Fahrzeuges 12 positioniert. Die beiden Seitenbürsten 15 und 16 sind sowohl in Längsrichtung als auch in Querrichtung des Fahrzeuges 12 verfahrbar und werden zu Beginn eines Reinigungsvorganges zur Reinigung des Frontbereiches 19 jeweils in Querrichtung ungefähr bis zur Fahrzeugmitte und zurück in ihre Ausgangsstellung verfahren. Anschließend werden die Seitenbürsten 15, 16 entlang der Fahrzeuglängsseiten 20, 21 bis hinter das Fahrzeugheck 22 verfahren. In dieser Stellung sind die Seiten- und Dachbürsten 15, 16, 18 in den Figuren 1 und 2 strichpunktiert dargestellt. Während die Seitenbürsten 15, 16 entlang der Längsseiten 20, 21 des Fahrzeuges 12 verfahren werden, wird gleichzeitig die Dachbürste 18 entsprechend der Fahrzeugkontur über das Fahrzeug 12 bis in dessen Heckbereich 22 verfahren, wobei zunächst auch mittels der Dachbürste 18 eine Reinigung des Frontbereiches 42 vorgenommen wird. Erreichen die Seitenbürsten 15, 16 das Heck 22, so werden sie zu dessen Reinigung in Querrichtung bis ungefähr zur Fahrzeugmitte und zurück verfahren, und anschließend erfolgt eine weitere Heckreinigung mittels der Dachbürste 18.

Das voranstehend erläuterte Verfahren zur Reinigung des Fahrzeuges 12 hat sich für verhältnismäßig kurze Fahrzeuge bewährt. Sollen allerdings überlange Fahrzeuge gereinigt werden, so kann dies zur Folge haben, daß eine Reinigung der Front- und Heckbereiche des Fahrzeuges mit Seiten- und Dachbürsten nicht mehr möglich ist.

In den Figuren 3 und 4 ist in schematischer Darstellung eine bekannte Fahrzeugwaschanlage dargestellt, mit deren Hilfe auch überlange Fahrzeuge in ihrem Front- und Heckbereich gereinigt werden können. Die Fahrzeugwaschanlage ist in den Figuren 3 und 4 mit dem Bezugszeichen 25 belegt. Sie umfaßt ebenfalls zwei jeweils um eine vertikal ausgerichtete Drehachse 26, 27 rotierbare Seitenbürsten 28 bzw. 29 sowie eine um eine horizontal ausgerichtete Drehachse 30 rotierbare Dachbürste 31, die gemeinsam an einem üblichen und deshalb in der Zeichnung nicht dargestellten Portal gehalten sind. Die Seitenbürsten 28 und 29 bilden erste Reinigungswerkzeuge, die sowohl in Längs- als auch in Querrichtung eines zu reinigenden Fahrzeuges an diesem vorbeibewegbar sind. Die Dachbürste 31 bildet ein zweites Reinigungswerkzeug, das in vertikaler Richtung entsprechend der Kontur des zu reinigenden Fahrzeuges verstellbar und in Längsrichtung des Fahrzeuges bewegbar ist.

Die Fahrzeugwaschanlage 25 umfaßt im Abstand zu der in den Figuren 3 und 4 dargestellten vorderen Endstellung der Seiten- und Dachbürsten 28, 29 und 31 eine Sensoreinheit in Form einer Lichtschranke 33 mit einem Lichtsender 34 und einem Lichtempfänger 35. Mittels des Lichtsenders 34 kann ein quer zur Fahrzeuglängsrichtung ausgerichteter Lichtstrahl 36 auf den Lichtempfänger 35 gerichtet werden.

Soll mittels der Fahrzeugwaschanlage 25 ein Fahrzeug gereinigt werden, so wird dieses zunächst bis zu einer Einfahrstellung 38 in die Fahrzeugwaschanlage 25 eingefahren. Bezogen auf die durch den Pfeil 39 symbolisierte Einfahrtrichtung sind die Seitenbürsten 28 und 29 sowie die Dachbürste 31 vor der Einfahrstellung 38 positioniert. Soll ein überlanges Fahrzeug gereinigt werden, wie es in den Figuren 3 und 4 mit dem Bezugszeichen 40 belegt ist, so ragt dessen Heckbereich 41 entgegen der Einfahrtrichtung 39 über die Lichtschranke 33 hinaus, so daß der Lichtstrahl 36 unterbrochen wird. Die Unterbrechung des Lichtstrahls 36 signalisiert, daß die Länge des Fahrzeuges 40 eine durch den Abstand zwischen der Einfahrstellung 38 und der Lage der Lichtschranke 33 gegebene Maximallänge überschreitet. Das überlange Fahrzeug 40 wird daraufhin in Einfahrtrichtung 39 bis zu einer Stopstellung 45 nach vorne verfahren. Die Stopstellung 45 zeichnet sich hierbei dadurch aus, daß lediglich die Dachbürste 31 vor dem Frontbereich 42 positioniert ist, während die Seitenbürsten 28 und 29 eine Position jeweils an einer Längsseite 43 bzw. 44 des Fahrzeuges 40 einnehmen.

Nach der Positionierung des überlangen Fahrzeuges 40 an der Stopstellung 45 werden die Seiten- und Dachbürsten 28, 29 und 31 aktiviert, wobei allerdings der Frontbereich 42 des Fahrzeuges 40 lediglich mittels der Dachbürste 31 gereinigt wird, während die Seitenbürsten 28, 29 im Frontbereich 42 des Fahrzeuges nicht in Querrichtung verfahren werden.

Wird mittels der Fahrzeugwaschanlage 25 ein verhältnismäßig kurzes Fahrzeug gereinigt, so führt dies dazu, daß bei seiner Positionierung in der Einfahrstellung 38 der Lichtstrahl 36 der Lichtschranke 33 nicht unterbrochen ist. Das verhältnismäßig kurze Fahrzeug wird demzufolge auch nicht weiter nach vorne bis zur Stopstellung 45 verfahren. Der Reinigungsvorgang beginnt vielmehr bei in der Einfahrstellung 38 positionierten Fahrzeug, so daß dessen Frontbereich sowohl mittels der Seitenbürsten 28 und 29 als auch mittels der Dachbürste 31 gereinigt werden kann.

Die Reinigung der Längsseiten 43, 44 sowie des Heckbereichs 41 des überlangen Fahrzeuges 40 erfolgt in üblicher Weise mittels der Seitenbürsten 28 und 29 und der Dachbürste 31, wie dies voranstehend unter Bezugnahme auf die Figuren 1 und 2 erläutert wurde.

Die Deaktivierung einer Querbewegung der Seitenbürsten 28 und 29 im Frontbereich 42 bei Unterbrechung des Lichtstrahls 36 aufgrund des überlangen Fahrzeuges 40 kann mittels einer in der Zeichnung nicht dargestellten Steuereinheit erfolgen, die sowohl mit der Lichtschranke 33 als auch mit einem Antrieb für die Querbewegung der Seitenbürsten 28, 29 in elektrischer Verbindung steht. Mittels der Steuereinheit kann zuverlässig sichergestellt werden, daß eine Querbewegung der Seitenbürsten 28, 29 im Frontbereich 42 des Fahrzeuges 40 unterbleibt, so daß dieses ohne Beschädigung zwischen den Seitenbürsten 28, 29 positioniert werden kann.

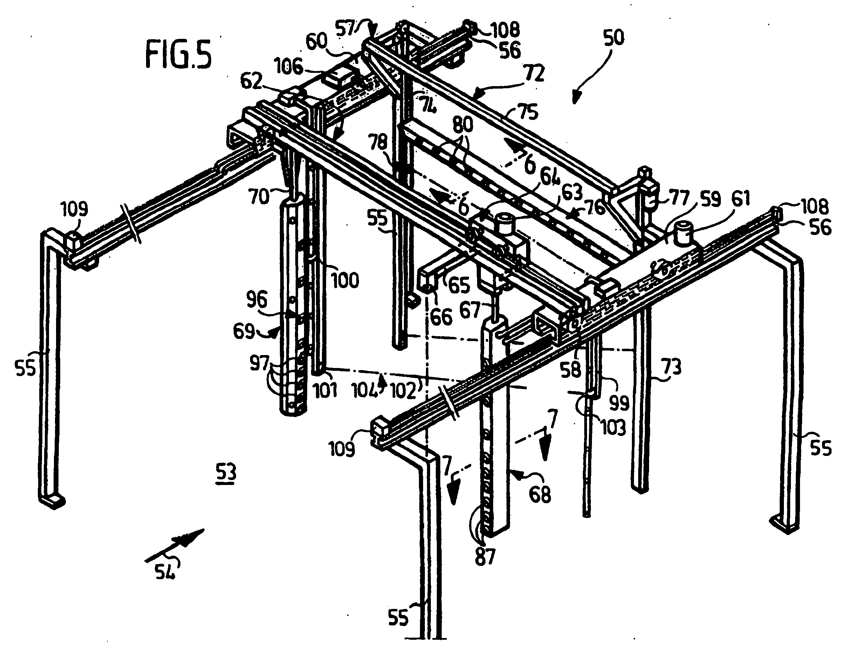

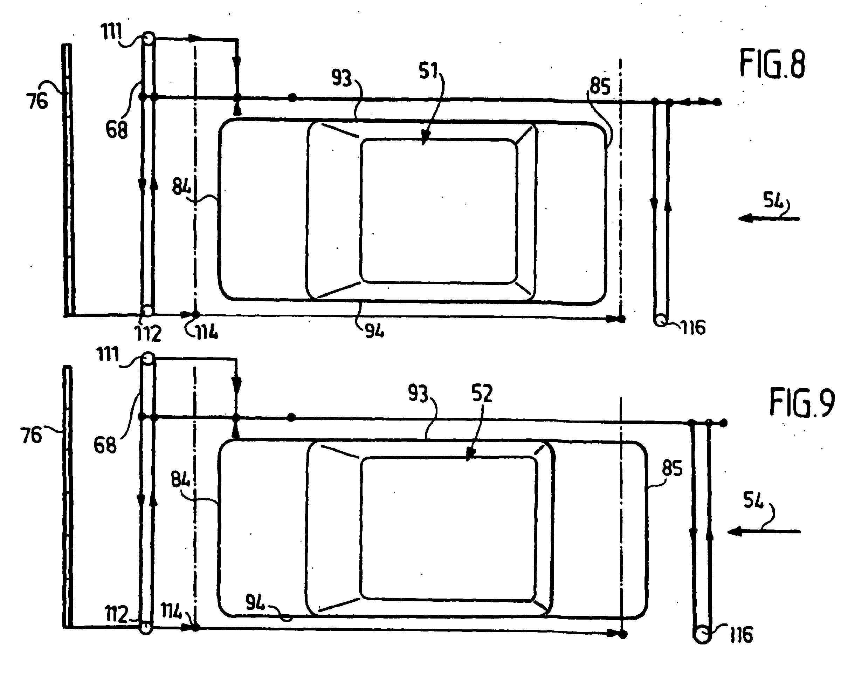

In den Figuren 5 bis 9 ist schematisch eine erfindungsgemäße Fahrzeugwaschanlage dargestellt, die insgesamt mit dem Bezugszeichen 50 belegt ist. Mittels der Fahrzeugwaschanlage 50 kann sowohl ein verhältnismäßig kurzes Fahrzeug, wie es in Figur 8 mit der Bezugsziffer 51 dargestellt ist, als auch ein verhältnismäßig langes Fahrzeug, wie es in Figur 9 mit der Bezugsziffer 52 illustriert ist, gereinigt werden. Die Fahrzeuge 51, 52 können hierzu auf einer Fahrbahn 53 abgestellt werden, nachdem sie in Einfahrtrichtung 54 in einen Waschbereich der Fahrzeugwaschanlage 50 eingefahren wurden.

Wie aus Figur 5 deutlich wird, sind zu beiden Seiten der Fahrbahn 53 senkrechte Stützen 55 angeordnet, die an ihrem oberen Ende oberhalb der zu reinigenden Kraftfahrzeuge längs der Fahrbahn 53 verlaufende Schienen 56 tragen.

Die Schienen 56 tragen eine Transporteinrichtung 57, die jeweils mittels Transporträder 58 längs in einer Schiene 56 verfahrbare Transportwagen 59, 60 sowie einem gemeinsamen Elektroantrieb 61 umfaßt.

Die beiden Transportwagen 59, 60 sind über eine Quertraverse 62 miteinander verbunden, an der quer zur Längsrichtung der Fahrzeuge 51, 52 ein mittels eines Elektromotors 63 antreibbarer Laufwagen 64 verfahrbar gelagert ist. An seinem dem Transportwagen 60 zugewandten Endbereich trägt der Laufwagen 64 einen entgegen der Einfahrtrichtung 54 abstehenden Ausleger 65, an dessem freien Ende ein Steuersensor in Form eines der Fahrbahn 53 zugewandten Reflextasters 66 angeordnet ist.

Im Abstand zum Ausleger 65 ist am Laufwagen 64 ein Düsentragarm 67 hängend gehalten, der eine vertikal ausgerichtete Düsenanordnung 68 trägt, die mittels des Laufwagens 64 in Querrichtung und mittels der Transportwagen 59, 60 in Längsrichtung der zu reinigenden Fahrzeuge 51, 52 verfahrbar ist.

Eine weitere vertikal ausgerichtete Düsenanordnung 69 ist an einem starr mit dem Transportwagen 60 verbundenen Düsentragarm 70 gehalten. Diese vertikale Düsenanordnung 69 kann mittels des Transportwagens 60 in Längsrichtung der zu reinigenden Fahrzeuge 51, 52 verfahren werden, eine Verfahrbarkeit in Querrichtung ist nicht vorgesehen.

Zusätzlich zur Quertraverse 62 nehmen die beiden Transportwagen 59, 60 ein Trägerportal 72 zwischen sich auf mit zwei vertikal ausgerichteten Führungsbalken 73, 74 und einem Querbalken 75, über den die beiden Führungsbalken 73, 74 miteinander verbunden sind. An den Führungsbalken 73, 74 ist eine horizontal ausgerichtete Düsenanordnung 76 in vertikaler Richtung verfahrbar gelagert, wobei zu dessen Antrieb ein Motor 77 am oberen Ende des Führungsbalkens 73 angeordnet ist. Die Düsenanordnung 76 kann mittels der Transportwagen 59, 60 in Längsrichtung der zu reinigenden Fahrzeuge 51, 52 verfahren und zusätzlich mittels des Motors 77 in vertikaler Richtung verstellt werden. Zur Führung der Düsenanordnung 76 entsprechend der Kontur der zu reinigenden Fahrzeuge 51, 52 ist unterhalb der Düsenanordnung 76, über in der Zeichnung nicht dargestellte Verbindungsglieder starr mit der Düsenanordnung 76 verbunden ein Steuersensor in Form einer Lichtschranke 78 angeordnet. Mittels der Lichtschranke 78 kann die Fahrzeugkontur erfaßt und entsprechend einem von der Lichtschranke 78 bereitgestellten Steuersignal kann der Motor 77 der Düsenanordnung 76 angesteuert werden. Dadurch kann sichergestellt werden, daß die Düsenanordnung 76 in einem vorgebbaren Abstand zur Fahrzeugoberfläche positionierbar ist.

Entsprechendes gilt für den Reflextaster 66, mit dessen Hilfe sichergestellt werden kann, daß die vertikale Düsenanordnung 68 in einem vorgebbaren Abstand zur Oberfläche des zu reinigenden Fahrzeuges positionierbar ist.

Die vertikal ausgerichtete Düsenanordnung 68 bildet ein sowohl in Querrichtung als auch in Längsrichtung der zu reinigenden Fahrzeuge 51, 52 verfahrbares erstes Reinigungswerkzeug, und mit der horizontal ausgerichteten Düsenanordnung 76 wird ein in vertikaler Richtung entsprechend der Fahrzeugkontur verstellbares und in Längsrichtung des Fahrzeuges an diesem vorbei bewegbares zweites Reinigungswerkzeug bereitgestellt.

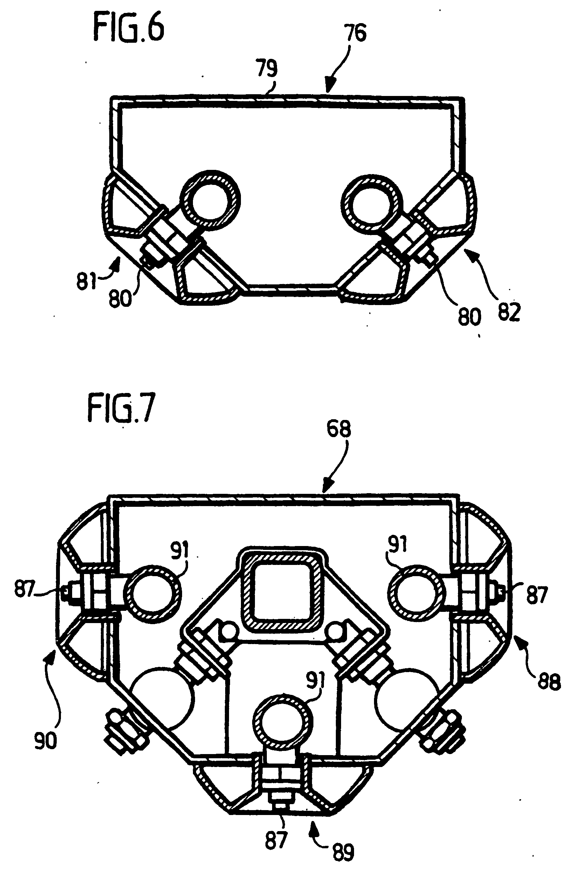

Der Aufbau der horizontal ausgerichteten Düsenanordnung 76 wird insbesondere aus Figur 6 deutlich. Die Düsenanordnung 76 umfaßt einen Düsenbalken 79, der mit seinen freien Stirnseiten an den Führungsbalken 73, 74 in vertikaler Richtung verfahrbar gelagert ist und auf seiner der Fahrbahn 53 zugewandten Unterseite zwei Gruppen von in horizontaler Richtung in gleichmäßigem Abstand aufgereihten Hochdruckdüsen 80 trägt, wobei eine erste Düsengruppe 81 mit einer Richtungskomponente entgegen der Einfahrtrichtung 54 und eine zweite Düsengruppe 82 mit einer Richtungskomponente in Einfahrtrichtung 54 jeweils schräg zur Fahrbahn 53 ausgerichtet ist. Die Hochdruckdüsen 80 der ersten und zweiten Düsengruppe 81 bzw. 82 sind in an sich bekannter und deshalb in der Zeichnung nicht dargestellter Weise mit einer Reinigungsflüssigkeit beaufschlagbar, so daß das Dach und die Motorhaube der zu reinigenden Fahrzeuge 51, 52 sowie auch deren Frontbereiche 84 und deren Heckbereiche 85 zumindest von einer der Düsengruppen 81, 82 mit der Reinigungsflüssigkeit besprühbar oder bespritzbar sind.

Der Aufbau der sowohl in Längs- als auch in Querrichtung verfahrbaren, vertikal ausgerichteten Düsenanordnung 68 wird insbesondere aus Figur 7 deutlich. Die Düsenanordnung 68 umfaßt insgesamt drei Gruppen von in vertikaler Richtung aufgereihten Hochdruckdüsen 87, wobei eine erste Düsengruppe 88 entgegen der Einfahrtrichtung 54 ausgerichtet ist, so daß mittels dieser ersten Düsengruppe 88 der Frontbereich 84 der zu reinigenden Fahrzeuge 51, 52 mit Reinigungsflüssigkeit besprüht oder bespritzt werden kann. Eine zweite Düsengruppe 89 ist um 90° versetzt zur ersten Düsengruppe 88 angeordnet, so daß mittels der zweiten Düsengruppe 89 eine Längsseite 93 der zu reinigenden Fahrzeuge 51, 52 mit Reinigungsflüssigkeit besprüht oder bespritzt werden kann. Eine dritte Düsengruppe 90 ist um 180° zur ersten Düsengruppe 88 versetzt angeordnet und ermöglicht es, den Heckbereich 85 der Fahrzeuge 51, 52 bei einer weiteren Querbewegung der Düsenanordnung 68 mit Reinigungsflüssigkeit zu besprühen oder zu bespritzen.

Die Hochdruckdüsen 87 der ersten, zweiten und dritten Düsengruppen 88, 89, 90 sind jeweils über eine Versorgungsleitung 91 miteinander verbunden, über die die jeweiligen Hochdruckdüsen 87 der einzelnen Düsengruppen wahlweise mit Reinigungsflüssigkeit beaufschlagbar sind.

Im Gegensatz zur Düsenanordnung 68 weist die vertikal ausgerichtete Düsenanordnung 69 nur eine einzige Düsengruppe 96 auf mit mehreren, in vertikaler Richtung aufgereihten Hochdruckdüsen 97, die quer zur Längsrichtung der Fahrbahn 53 einer Längsseite 94 der zu reinigenden Fahrzeuge 51, 52 zugewandt ausgerichtet sind.

Zwischen den vertikalen Düsenanordnungen 68, 69 und der horizontalen Düsenanordnung 76 ist an den Transportwagen 59, 60 jeweils ein in Richtung auf die Fahrbahn 53 nach unten abstehender Halter 99 bzw. 100 fixiert, wobei der am Transportwagen 60 angeordnete Halter 100 eine größere Länge aufweist als der am Transportwagen 59 angeordnete Halter 99. Am freien Ende des Halters 100 ist ein Lichtsender 101 gehalten, der einen Lichtstrahl 102 auf einen am freien Ende des Halters 99 angeordneten Lichtempfänger 103 richtet. Der Lichtsender 101 bildet in Kombination mit dem Lichtempfänger 103 eine schräg zur Horizontale ausgerichtete Lichtschranke 104.

Der Lichtempfänger 103 ist ebenso wie der Reflextaster 66 und der Lichtempfänger der Lichtschranke 78 über an sich bekannte und deshalb zur Erzielung einer besseren Übersichtlichkeit in der Zeichnung nicht dargestellte elektrische Verbindungsleitungen mit einer auf dem Transportwagen 60 angeordneten elektrischen Steuereinheit 106 verbunden, die ihrerseits über eine elektrische Verbindungsleitung mit dem Motor 77 der horizontal ausgerichteten Düsenanordnung 76 in Verbindung steht.

Die Schienen 56 tragen an ihrem in Einfahrtrichtung 54 vorderen Ende sowie an ihrem bezogen auf die Einfahrtrichtung 54 hinteren Ende jeweils einen vorderen bzw. hinteren Endschalter 108, 109, die über in der Zeichnung ebenfalls nicht dargestellte elektrische Verbindungsleitungen mit der Steuereinheit 106 in elektrischer Verbindung stehen. Diese wiederum ist mit dem Elektroantrieb 61 der Transportwagen 59 und 60 gekoppelt.

Die Reinigung von Kraftfahrzeugen mittels der Fahrzeugwaschanlage 50 wird nachfolgend unter Bezugnahme auf die Figuren 8 und 9 erläutert. Zur Vereinfachung der Darstellung ist in diesen Figuren lediglich der Verfahrweg der vertikal ausgerichteten Düsenanordnung 68 und der horizontal ausgerichteten Düsenanordnung 76 dargestellt. Wie bereits erläutert, wird die weitere vertikale Düsenanordnung 69 entsprechend der Düsenanordnung 68 in Längsrichtung, nicht jedoch in Querrichtung verfahren.

Wie insbesondere aus Figur 5 deutlich wird, ist die ein erstes Reinigungswerkzeug ausbildende vertikale Düsenanordnung 68 bezogen auf die Einfahrtrichtung 54 versetzt zu der ein zweites Reinigungswerkzeug ausbildenden horizontalen Düsenanordnung 76 angeordnet. Letztere bildet ein vorderes Reinigungswerkzeug, während die Düsenanordnung 68 ein hinteres Reinigungswerkzeug ausbildet. Zur Reinigung eines Fahrzeuges wird dieses in einem vorgebbaren Abstand zu einer in den Figuren 8 und 9 veranschaulichten Startposition 111 der Düsenanordnung 68 positioniert. Der Abstand kann beispielsweise 30 cm betragen.

Die horizontale Düsenanordnung 76 ist in Einfahrtrichtung 54 im Abstand zur vertikalen Düsenanordnung 68 vor dem zu reinigenden Fahrzeug angeordnet. Die Positionierung der zu reinigenden Fahrzeuge erfolgt hierbei in gleicher Weise sowohl für ein verhältnismäßig kurzes Fahrzeug 51 (siehe Figur 8) als auch für ein überlanges Fahrzeug 52 (siehe Figur 9). Nach dem Starten eines Waschprogramms wird die Düsenanordnung 68 zunächst quer zu den zu reinigenden Fahrzeugen 51, 52 entlang der Fahrzeugfront 84 verfahren, bis sie einen der Startposition 111 gegenüberliegenden, das Erreichen einer Endposition signalisierenden Näherungs- oder Berührungshalter 112 erreicht. Anschließend wird die Düsenanordnung 68 wieder zurück in die Startposition 111 verfahren und während dieser Hin- und Herbewegung wird die Fahrzeugfront 84 mittels der Hochdruckdüsen 87 der ersten Düsengruppe 88 mit Reinigungsflüssigkeit besprüht und bespritzt.

In einem nächsten Verfahrensschritt werden die vertikalen Düsenanordnungen 68 und 69 sowie die horizontale Düsenanordnung 76 mittels der Transporteinrichtung 57 eine definierte Wegstrecke von beispielsweise 30 cm entgegen der Einfahrtrichtung 54 in Richtung auf die Fahrzeuge 51 bzw. 52 bewegt. Daraufhin erfolgt mittels des Laufwagens 64 eine erneute Querbewegung der Düsenanordnung 68, bis der am Ausleger 65 gehaltene Reflextaster 66 belegt ist und somit das Erreichen der Längsseite 93 des Fahrzeuges 51 bzw. 52 signalisiert. Anschließend wird der Laufwagen 64 wieder in die der Längsseite 93 abgewandte Richtung verfahren, bis der Reflextaster 66 wieder frei ist, wobei dann aufgrund der gewählten Länge des Auslegers 65 sichergestellt ist, daß die Düsenanordnung 68 einen vorgegebenen Abstand zur Fahrzeuglängsseite 93 einnimmt. Sämtliche Düsenanordnungen werden danach mittels der Transporteinrichtung 57 soweit entgegen der Einfahrtrichtung 54 verfahren, bis die horizontal ausgerichtete Düsenanordnung 76 eine Frontstellung 114 unmittelbar vor dem Frontbereich 84 des zu reinigenden Fahrzeuges 51 bzw. 52 einnimmt. Die Fahrt der Transporteinrichtung 57 entlang der Schienen 56 wird dann unterbrochen, so daß mittels einer Vertikalbewegung der horizontalen Düsenanordnung 76 der Frontbereich des zu reinigenden Fahrzeuges 51 bzw. 52 ein zweites Mal gereinigt werden kann.

In einem weiteren Verfahrensschritt werden dann sämtliche Düsenanordnungen entgegen der Einfahrtrichtung 54 verfahren, wobei mittels der vertikalen Düsenanordnungen 68 und 69 die Fahrzeuglängsseiten 93 und 94 und mittels der horizontal ausgerichteten Düsenanordnung 76 die Motorhaube und das Dach der Fahrzeuge 51 bzw. 52 gereinigt werden.

Wird durch die Lichtschranke 104 das Überschreiten des Fahrhecks 85 signalisiert, so wird die Längsfahrt der Transporteinrichtung 57 gestoppt und der Elektromotor 63 wird dann zum Verfahren des Laufwagens 64 und damit der vertikalen Düsenanordnung 68 erneut aktiviert, so daß diese entlang des Fahrzeughecks 85 quer zum Fahrzeug 51 bzw. 52 verfahren werden kann, bis durch die Aktivierung eines Näherungsschalters 116 das Erreichen einer Endposition signalisiert wird und die Düsenanordnung 68 anschließend entlang des Fahrzeughecks 85 wieder zur Seite verfahren wird. Aufgrund des gewählten Abstandes zwischen der das Fahrzeugheck 85 erfassenden Lichtschranke 104 und der Düsenanordnung 68 ist gewährleistet, daß die Düsenanordnung 68 bei ihrer Querbewegung hinter dem Fahrzeug 51 bzw. 52 einen vorgegebenen Abstand zum Fahrzeug 51 bzw. 52 einnimmt.

Nach erfolgter Hin- und Herbewegung der Düsenanordnung 68 im Heckbereich des Fahrzeuges 51 wird die Transport-einrichtung 57 entgegen der Einfahrtrichtung 54 solange weiterverfahren, bis die der horizontal ausgerichteten Düsenanordnung 76 zugeordnete Lichtschranke 78 ebenfalls das Erreichen des Fahrzeughecks 85 signalisiert. In dieser Stellung wird dann die horizontale Düsenanordnung 76 in vertikaler Richtung zur zusätzlichen Reinigung des Fahrzeughecks 85 verfahren.

Soll allerdings das überlange Fahrzeug 52 gereinigt werden, so kann es vorkommen, daß die das Erreichen der hinteren Endstellung der Transporteinrichtung 57 signalisierenden hinteren Endschalter 109 bereits belegt werden, bevor die horizontale Düsenanordnung 76 den Heckbereich 85 des überlangen Fahrzeuges 52 erreicht. In diesem Falle wird mittels der Steuereinheit 106 die horizontale Düsenanordnung 76 deaktiviert, so daß das Fahrzeugheck 85 des überlangen Fahrzeuges 52 lediglich mit Hilfe der vertikalen Düsenanordnung 68 gereinigt wird. Die Auswertung der von den Lichtschranken 104 und 78 sowie dem hinteren Endschalter 109 bereitgestellten Signale ermöglicht es der Steuereinheit 106, je nach Länge des zu reinigenden Fahrzeuges zur Heckreinigung entweder sowohl die ersten als auch die zweiten Reinigungswerkzeuge oder aber - bei Vorliegen eines überlangen Fahrzeuges - nur die ersten Reinigungswerkzeuge einzusetzen.

## Patentansprüche

1. Fahrzeugwaschanlage mit mindestens einem vertikal ausgerichteten, in Längs- und in Querrichtung des zu reinigenden Fahrzeuges an diesem vorbei bewegbaren ersten Reinigungswerkzeug (68) und mit mindestens einem horizontal ausgerichteten, in vertikaler Richtung entsprechend der Fahrzeugkontur verstellbaren und in Längsrichtung des Fahrzeuges bewegbaren zweiten Reinigungswerkzeug (76) sowie mit einer Prüfeinrichtung (104, 109) zur Prüfung, ob die Fahrzeuglänge einen vorgegebenen Maximalwert überschreitet, wobei bei den Maximalwert überschreitender Fahrzeuglänge nur das mindestens eine erste Reinigungswerkzeug (68) oder nur das mindestens eine zweite Reinigungswerkzeug (76) zur Reinigung der Fahrzeugfront (84) und/oder des Fahrzeughecks (85) aktivierbar ist, wobei die ersten und zweiten Reinigungswerkzeuge (68, 76) bezogen auf die Einfahrtrichtung (54) des zu reinigenden Fahrzeuges (51; 52) versetzt zueinander an einer längs einer Führungsbahn (56) verfahrbaren Transporteinrichtung (57) gehalten sind und vordere und hintere Reinigungswerkzeuge (76 bzw 68) ausbilden, und wobei die Fahrzeugwaschanlage (50) einen vorderen und/oder einen hinteren Endschalter (108, 109) umfaßt, der ein Signal bereitstellt, sobald die Transporteinrichtung (57) bezogen auf die Einfahrtrichtung (54) des zu reinigenden Fahrzeuges (51; 52) das vordere und/oder hintere Ende der Führungsbahn (56) erreicht hat und wobei die Fahrzeugwaschanlage (50) einen Endsensor (104) aufweist zum Erfassen des Front- und/oder Heckendes (84, 85) des Fahrzeuges, **dadurch gekennzeichnet, daß** der Endsensor (104) zwischen den vorderen und hinteren Reinigungswerkzeugen (68, 76) angeordnet ist.

2. Fahrzeugwaschanlage nach Anspruch 1, **dadurch gekennzeichnet, daß** die Fahrzeugwaschanlage zwei erste Reinigungswerkzeuge umfaßt, die jeweils an einer Seite des zu reinigenden Fahrzeuges positionierbar sind.

3. Fahrzeugwaschanlage nach Anspruch 2, **dadurch gekennzeichnet, daß** die beiden ersten Reinigungswerkzeuge als jeweils um eine vertikale Drehachse rotierbare Waschbürsten ausgebildet sind.

4. Fahrzeugwaschanlage nach einem der Ansprüche 1 bis 3, **dadurch gekennzeichnet, daß** ein zweites Reinigungswerkzeug als um eine horizontale Drehachse rotierbare Waschbürste ausgebildet ist.

5. Fahrzeugwaschanlage nach einem der Ansprüche 1 bis 4, **dadurch gekennzeichnet, daß** die ersten Reinigungswerkzeuge mindestens eine vertikal ausgerichtete Düsenanordnung (68) umfassen, die zur Reinigung des Fahrzeuges (51; 52) mit Reinigungsflüssigkeit beaufschlagbar ist.

6. Fahrzeugwaschanlage nach Anspruch 5, **dadurch gekennzeichnet, daß** die Düsenanordnung zumindest zwei Düsengruppen (88, 89, 90) umfaßt, wobei eine erste Düsengruppe (88) während einer Querbewegung und eine zweite Düsengruppe (89) während einer Längsbewegung der Düsenanordnung (68) dem zu reinigenden Fahrzeug (51; 52) zugewandt ist.

7. Fahrzeugwaschanlage nach Anspruch 5 oder 6, **dadurch gekennzeichnet, daß** mindestens eine Düsenanordnung (68) drei Düsengruppen (88, 89, 90) umfaßt, wobei eine erste Düsengruppe (88) während einer Querbewegung vor dem zu reinigenden Fahrzeug (51; 52), eine zweite Düsengruppe (89) während einer Längsbewegung entlang einer Fahrzeuglängsseite (93) und eine dritte Düsengruppe (90) während einer Querbewegung hinter dem zu reinigenden Fahrzeug (51; 52) dem Fahrzeug (51; 52) zugewandt ist.

8. Fahrzeugwaschanlage nach einem der Ansprüche 1 bis 7, **dadurch gekennzeichnet, daß** ein zweites Reinigungswerkzeug als horizontal ausgerichtete Düsenanordnung (76) ausgebildet ist, die mit Reinigungsflüssigkeit beaufschlagbar ist und erste und zweite Düsengruppen (81, 82) umfaßt, wobei die erste Düsengruppe (81) bezogen auf die Einfahrtrichtung (54) des zu reinigenden Fahrzeuges (51; 52) mit einer schräg nach hinten weisenden Richtungskomponente und die zweite Düsengruppe (82) mit einer schräg nach vorne weisenden Richtungskomponente auf das Fahrzeug (51; 52) gerichtet ist.

9. Fahrzeugwaschanlage nach einem der Ansprüche 1 bis 8, **dadurch gekennzeichnet, daß** den ersten und zweiten Reinigungswerkzeugen (68, 76) Steuersensoren (66, 78) zugeordnet sind zur Steuerung der Reinigungswerkzeuge (68, 76) während ihrer Bewegung entlang des Fahrzeuges (51; 52).

10. Fahrzeugwaschanlage nach einem der Ansprüche 1 bis 9, **dadurch gekennzeichnet, daß** der Endsensor eine schräg zur Horizontale ausgerichtete Lichtschranke (104) umfaßt.

11. Fahrzeugwaschanlage nach einem der Ansprüche 1 bis 10, **dadurch gekennzeichnet, daß** die Prüfeinrichtung eine Steuereinheit (106) umfaßt, die mit dem Endschalter (109), dem Endsensor (104) sowie mit dem Steuersensor (78, 66) des vorderen und/oder hinteren Reinigungswerkzeuges (68, 76) gekoppelt ist und die die vorderen und hinteren Reinigungswerkzeuge (68, 76) zur Reinigung der Fahrzeugfront (84) und/oder des Fahrzeughecks (85) steuert.

12. Fahrzeugwaschantalage nach Anspruch 11, **dadurch gekennzeichnet, daß** mittels der Steuereinheit (106) das bezogen auf die Einfahrtrichtung (54) des zu reinigenden Fahrzeuges (51; 52) vordere Reinigungswerkzeug (76) deaktivierbar ist, sofern sowohl der hintere Endschalter (109) als auch der Steuersensor (78) des vorderen Reinigungswerkzeuges (76) belegt sind und der Endsensor (104) das Überschreiten des Fahrzeughecks (85) anzeigt.

13. Fahrzeugwaschanlage nach Anspruch 11 oder 12, **dadurch gekennzeichnet, daß** mittels der Steuereinheit (106) das bezogen auf die Einfahrtrichtung (54) des zu reinigenden Fahrzeuges hintere Reinigungswerkzeug (68) deaktivierbar ist, sofern sowohl der vordere Endschalter (108) als auch der Steuersensor des hinteren Reinigungswerkzeuges (68) belegt sind und der Endsensor (104) das Überschreiten der Fahrzeugfront anzeigt.

## Claims

1. Vehicle washing facility comprising at least one first, vertically aligned cleaning tool (68) movable past the vehicle to be cleaned in a longitudinal and in a transverse direction thereof, and comprising at least one second, horizontally aligned cleaning tool (76) movable in a longitudinal direction of the vehicle and adjustable in a vertical direction in accordance with the contour of the vehicle, and comprising a checking device (104, 109) for checking whether the length of the vehicle exceeds a predetermined maximum value, wherein only the at least one first cleaning tool (68) or only the at least one second cleaning tool (76) is adapted to be activated for cleaning the front (84) of the vehicle and/or the rear (85) of the vehicle when the length of the vehicle exceeds the maximum value, wherein with respect to the drive-in direction (54) of the vehicle (51; 52) to be cleaned the first and second cleaning tools (68, 76) are held on a transport device (57) displaceable along a guideway (56) so as to be offset relative to one another and form front and rear cleaning tools (76 and 68, respectively), and wherein the vehicle washing facility (50) comprises a front and/or a rear end switch (108, 109) making a signal available as soon as the transport device (76) has reached the front and/or rear end of the guideway (56) with respect to the drive-in direction (54) of the vehicle (51; 52) to be cleaned, and wherein the vehicle washing facility (50) comprises an end sensor (104) for detecting the front and/or rear end (84, 85) of the vehicle, **characterized in that** the end sensor (104) is arranged between the front and rear cleaning tools (68, 76).

2. Vehicle washing facility in accordance with claim 1, **characterized in that** the vehicle washing facility comprises two first cleaning tools, each positionable on one side of the vehicle to be cleaned.

3. Vehicle washing facility in accordance with claim 2, **characterized in that** the two first cleaning tools are designed as wash brushes, each rotatable about a vertical axis of rotation.

4. Vehicle washing facility in accordance with any one of claims 1 to 3, **characterized in that** a second cleaning tool is designed as a wash brush rotatable about a horizontal axis of rotation.

5. Vehicle washing facility in accordance with any one of claims 1 to 4, **characterized in that** the first cleaning tools comprise at least one vertically aligned nozzle arrangement (68) adapted to be acted upon with cleaning liquid for cleaning the vehicle (51; 52).

6. Vehicle washing facility in accordance with claim 5, **characterized in that** the nozzle arrangement comprises at least two groups of nozzles (88, 89, 90), a first group of nozzles (88) facing the vehicle (51; 52) to be cleaned during a transverse movement and a second group of nozzles (89) during a longitudinal movement of the nozzle arrangement (68).

7. Vehicle washing facility in accordance with claim 5 or 6, **characterized in that** at least one nozzle arrangement (68) comprises three groups of nozzles (88, 89, 90), a first group of nozzles (88) facing the vehicle (51; 52) during a transverse movement in front of the vehicle (51; 52) to be cleaned, a second group of nozzles (89) during a longitudinal movement along a longitudinal side (93) of the vehicle, and a third group of nozzles (90) during a transverse movement behind the vehicle (51; 52) to be cleaned.

8. Vehicle washing facility in accordance with any one of claims 1 to 7, **characterized in that** a second cleaning tool is designed as a horizontally aligned nozzle arrangement (76) adapted to be acted upon with cleaning liquid and comprising first and second groups of nozzles (81, 82), the first group of nozzles (81) being directed at the vehicle (51; 52) with a directional component pointing rearwards at an angle and the second group of nozzles (82) with a directional component pointing forwards at an angle with respect to the drive-in direction (54) of the vehicle (51; 52) to be cleaned.

9. Vehicle washing facility in accordance with any one of claims 1 to 8, **characterized in that** control sensors (66, 78) are associated with the first and second cleaning tools (68, 76) for controlling the cleaning tools (68, 76) during their movement along the vehicle (51; 52).

10. Vehicle washing facility in accordance with any one of claims 1 to 9, **characterized in that** the end sensor comprises a light barrier (104) aligned at an angle to the horizontal.

11. Vehicle washing facility in accordance with any one of claims 1 to 10, **characterized in that** the checking device comprises a control unit (106) coupled to the end switch (109), the end sensor (104) as well as to the control sensor (78, 66) of the front and/or rear cleaning tool (68, 76) and controlling the front and rear cleaning tools (68, 76) for cleaning the front (84) of the vehicle and/or the rear (85) of the vehicle.

12. Vehicle washing facility in accordance with claim 11, **characterized in that** the front cleaning tool (76) with respect to the drive-in direction (54) of the vehicle (51; 52) to be cleaned is adapted to be deactivated by means of the control unit (106) insofar as both the rear end switch (109) and the control sensor (78) of the front cleaning tool (76) are activated and the end sensor (104) indicates the rear (85) of the vehicle has been passed.

13. Vehicle washing facility in accordance with claim 11 or 12, **characterized in that** the rear cleaning tool (68) with respect to the drive-in direction (54) of the vehicle to be cleaned is adapted to be deactivated by means of the control unit (106) insofar as both the front end switch (108) and the control sensor of the rear cleaning tool (68) are activated and the end sensor (104) indicates the front of the vehicle has been passed.

## Revendications

1. Installation de lavage de véhicule comportant au moins un premier outil de nettoyage (68) orienté verticalement et apte à se déplacer tout près du véhicule à nettoyer dans les directions longitudinale et transversale de celui-ci et au moins un deuxième outil de nettoyage (76) orienté horizontalement, apte à se déplacer dans une direction verticale suivant le contour du véhicule et mobile dans la direction longitudinale du véhicule ainsi qu'un dispositif de vérification (104, 109) destiné à vérifier si la longueur du véhicule est supérieure à une valeur maximale prédéterminée, au moins un premier outil de nettoyage (68) ou l'au moins un deuxième outil de nettoyage (76) destiné à nettoyer l'avant (84) et/ou l'arrière (85) du véhicule ne pouvant être activés que lorsque la longueur du véhicule est supérieure à la valeur maximale, les premiers et deuxièmes outils de nettoyage (68, 76) étant supportés par un dispositif de transport (57) déplaçable le long d'une voie de guidage (56) en étant décalés l'un par rapport à l'autre par référence au sens d'entrée (56) du véhicule à nettoyer (51 ; 52) et formant des outils de nettoyage avant et arrière (76 respectivement 68), et l'installation de lavage de véhicule (50) comportant un commutateur de fin de course avant et/ou arrière (108, 109) qui délivre un signal dès que le dispositif de transport (57) a atteint l'extrémité avant et/ou arrière de la voie de guidage (56) par référence au sens de d'entrée (54) du véhicule à nettoyer (51 ; 52) et l'installation de lavage de véhicule (50) comportant un capteur de fin de course (104) destiné à détecter l'extrémité avant et/ou arrière (84, 85) du véhicule, **caractérisée en ce que** capteur de fin de course (104) est placé entre les outils de nettoyage avant et arrière (68, 76).

2. Installation de lavage de véhicule selon la revendication 1, **caractérisée en ce que** l'installation de lavage de véhicule comporte deux premiers outils de nettoyage qui peuvent être positionnés chacun sur un côté du véhicule à nettoyer.

3. Installation de lavage de véhicule selon la revendication 2, **caractérisée en ce que** chacun des deux premiers outils de nettoyage est conformé en brosse de lavage apte à tourner autour d'un axe de rotation vertical.

4. Installation de lavage de véhicule selon l'une des revendications 1 à 3, **caractérisée en ce qu'**un deuxième outil de nettoyage est conformé en brosse de lavage apte à tourner autour d'un axe de rotation horizontal.

5. Installation de lavage de véhicule selon l'une des revendications 1 à 4, **caractérisée en ce que** les premiers outils de nettoyage comportent au moins un agencement de buses (68), orientées verticalement, qui peuvent être alimentées en liquide de nettoyage afin de nettoyer le véhicule (51 ; 52).

6. Installation de lavage de véhicule selon la revendication 5, **caractérisée en ce que** l'agencement de buses comporte au moins deux groupes de buses (88, 89, 90), un premier groupe de buses (88) étant dirigé vers le véhicule à nettoyer (51 ; 52) pendant un déplacement transversal de l'agencement de buses (68) et un deuxième groupe de buses (89) étant dirigé vers le véhicule à nettoyer (51 ; 52) pendant un déplacement longitudinal de l'agencement de buses (68).

7. Installation de lavage de véhicule selon la revendication 5 ou 6, **caractérisée en ce qu'**au moins un agencement de buses (68) comporte trois groupes de buses (88, 89, 90), un premier groupe de buses (88) étant dirigé vers le véhicule (51 ; 52) lors d'un déplacement transversal en avant du véhicule à nettoyer (51 ; 52), un deuxième groupe de buses (89) étant dirigé vers le véhicule (51 ; 52) pendant un déplacement longitudinal le long d'un côté longitudinal (93) du véhicule et un troisième groupe de buses (90) étant dirigé vers le véhicule (51 ; 52) pendant un déplacement transversal en arrière du véhicule à nettoyer (51 ; 52).

8. Installation de lavage de véhicule selon l'une des revendications 1 à 7, **caractérisée en ce qu'**un deuxième outil de nettoyage est conformé en agencement de buses (76), orienté horizontalement, qui peut être alimenté en liquide de nettoyage et qui comporte des premier et deuxième groupes de buses (80, 82), le premier groupe de buses (80) étant dirigé vers le véhicule (51 ; 52) par référence au sens d'entrée (54) du véhicule à nettoyer (51 ; 52) avec une composante directionnelle dirigée obliquement vers l'arrière par référence au sens d'entrée (54) du véhicule à nettoyer (51 ; 52) et le deuxième groupe de buses (82) étant dirigé vers le véhicule (51 ; 52) avec une composante directionnelle dirigée obliquement vers l'avant par référence au sens d'entrée (54) du véhicule à nettoyer (51 ; 52).

9. Installation de lavage de véhicule selon l'une des revendications 1 à 8, **caractérisée en ce que** des capteurs de commande (66, 76) sont associés aux premiers et deuxièmes outils de nettoyage (68, 76) afin de commander les outils de nettoyage (68, 76) pendant leur déplacement le long du véhicule (51 ; 52).

10. Installation de lavage de véhicule selon l'une des revendication 1 à 9, **caractérisée en ce que** le capteur de fin de course comporte une barrière lumineuse (104) orientée obliquement par rapport à l'horizontale.

11. Installation de lavage de véhicule selon l'une des revendications 1 à 10, **caractérisée en ce que** le dispositif de vérification comporte une unité de commande (106) qui est couplée au commutateur de fin de course (109), au capteur de fin de course (104) ainsi qu'au capteur de commande (78, 66) de l'outil de nettoyage avant et/ou arrière (68, 76) et qui commande les outils de nettoyage avant et arrière (68, 76) pour nettoyer l'avant (84) et/ou l'arrière (85) du véhicule.

12. Installation de lavage de véhicule selon la revendication 11, **caractérisée en ce que** l'outil de nettoyage avant (76), par référence au sens d'entrée (54) du véhicule à nettoyer (51 ; 52), peut être désactivé au moyen de l'unité de commande (106) si le capteur de fin de course arrière (109) ainsi que le capteur de commande (78) de l'outil de nettoyage avant (76) sont occupés et si le capteur de fin de course (104) indique que l'arrière (85) du véhicule est dépassé.

13. Installation de lavage de véhicule selon la revendication 11 ou 12, **caractérisée en ce que** l'outil de nettoyage arrière (76), par référence au sens d'entrée (54) du véhicule à nettoyer, peut être désactivé au moyen de l'unité de commande (106) si le capteur de fin de course avant (108) ainsi que le capteur de commande de l'outil de nettoyage arrière (68) sont occupés et si le capteur de fin de course (104) indique que l'avant du véhicule est dépassé.
